Europäisches Patentamt

European Patent Office

Office européen des brevets

(11) Publication number: **0 338 997**
**A2**

# EUROPEAN PATENT APPLICATION

(21) Application number: **89830076.9**

(22) Date of filing: **28.02.89**

(51) Int. Cl.⁴: **A 61 F 9/08**
G 08 B 3/10, G 09 B 21/00

(30) Priority: **20.04.88 IT 2026788**

(43) Date of publication of application:
**25.10.89 Bulletin 89/43**

(84) Designated Contracting States:
**AT BE CH DE ES FR GB GR LI LU NL SE**

(71) Applicant: **Reppucci Ales, Loredana**
**Via Grazioli, 84**
**I-38100 Trenti (IT)**

(72) Inventor: **Reppucci Ales, Loredana**
**Via Grazioli, 84**
**I-38100 Trenti (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

(54) Computer controlled information broadcasting system for aiding blind persons in town walking.

(57) There is disclosed an information broadcasting system, controlled by a computer, which has been specifically designed for aiding blind persons in walking through a town.

The system comprises at least a transmitting station, to be associated with a zone of interest, adapted to transmit or broadcast given information messages, relating to the interest zone, and at least a portable receiving station (R) which is able of automatically tuning on the transmitting station (T), the receiving station (R) or device being provided with means, to be actuated by the user, to selectively poll the transmitting station, and means adapted to transform the messages transmitted by the transmitting station into intelligible voice signals.

Fig.4

EP 0 338 997 A2

Bundesdruckerei Berlin

**Description**

## COMPUTER CONTROLLED INFORMATION BROADCASTING SYSTEM FOR AIDING BLIND PERSONS IN TOWN WALKING

BACKGROUND OF THE INVENTION

The present invention relates to an information broadcasting system which is controlled, in particular though not exclusively, by a computer, and has been designed for aiding blind person in walking through a town.

As is known, mainly because of very congested traffic roads, blind persons can hardly move through a town and this, in particular, near traffic lights, crossings and the like.

Moreover, a blind person frequently does not surely remember the locations of interest zones of a town, for example public buildings or offices and the like.

SUMMARY OF THE INVENTION

Accordingly, the task of the present invention is to overcome the above mentioned drawbacks, by providing a broadcasting system, controlled by a small computer, owing to which there is possible to make a town guiding net able of helping blind persons in selecting roads, moving near traffic lights and localizing public offices and the like.

Within the scope of the above mentioned task, a main object of the present invention is to provide such a broadcasting system which is designed based on different levels, starting from a simple localizing sound signalling up to the sending of intelligible complex signallings depending on the user requirements.

Another object of the present invention is to provide such a broadcasting system which is very reliable in operation and is able of autonomously indicating the status of given apparatus, such as traffic lights and which, moreover, can be constructed in a simple way and at a very low cost,

According to one aspect of the present invention, the above mentioned task and objects, as well as yet other objects, which will become more apparent hereinafter, are achieved by a computer controlled information broadcasting system, specifically designed for aiding blind persons in walking through a town, characterized in that said broadcasting system comprises at least a broadcasting or transmitting station, to be associated with a zone of interest, adapted to broadcast given information messages relating to said zone of interest, and at least a portable receiving station or device, adapted to automatically tune on said transmitting station, said portable receiving station including means, to be actuated by the user, adapted to selectively poll said transmitting station and means adapted to transform the messages transmitted by said transmitting station into intelligible signals.

BRIEF DESCRIPTION OF THE DRAWINGS

Further characteristics and advantages of the present invention will become more apparent from the following detailed description of a preferred, though not exclusive, embodiment of an information broadcasting system, controlled by a computer, which is illustrated, by way of an indicative but not limitative example, with reference to the accompanying drawings where:

Figure 1 is a schematic block diagram of the transmitting station included in the broadcasting system according to the invention;

Figure 2 is a schematic block diagram of a receiving station or device included in the broadcasting system according to the invention;

Figure 3 is a perspective view showing the main components of the subject system, that is a possible transmitting or broadcasting station and a possible receiving station;

Fig. 4 shows a possible way for the use of the subject system by a blind person; and

Figure 5 shows another possible way for the use of the subject system by a blind person.

DESCRIPTION OF THE PREFERRED EMBODIMENT

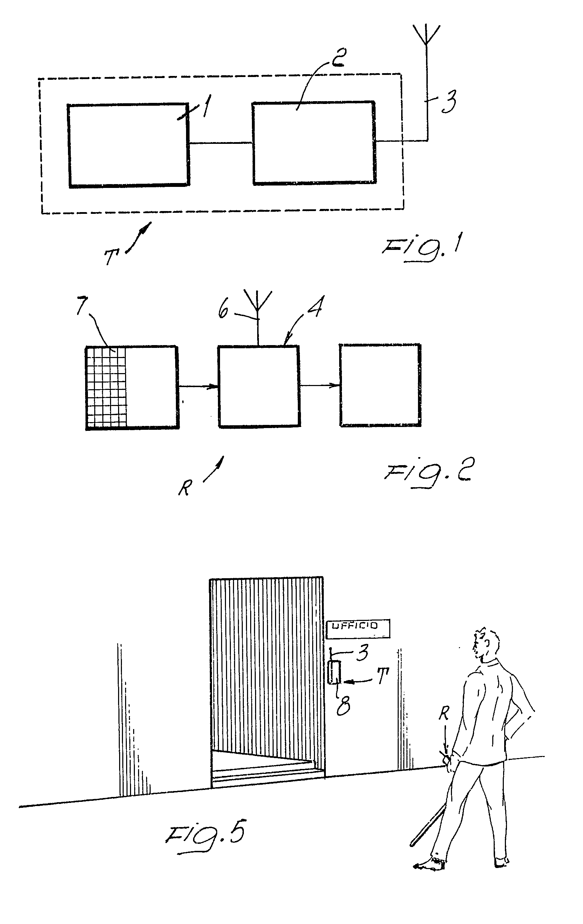

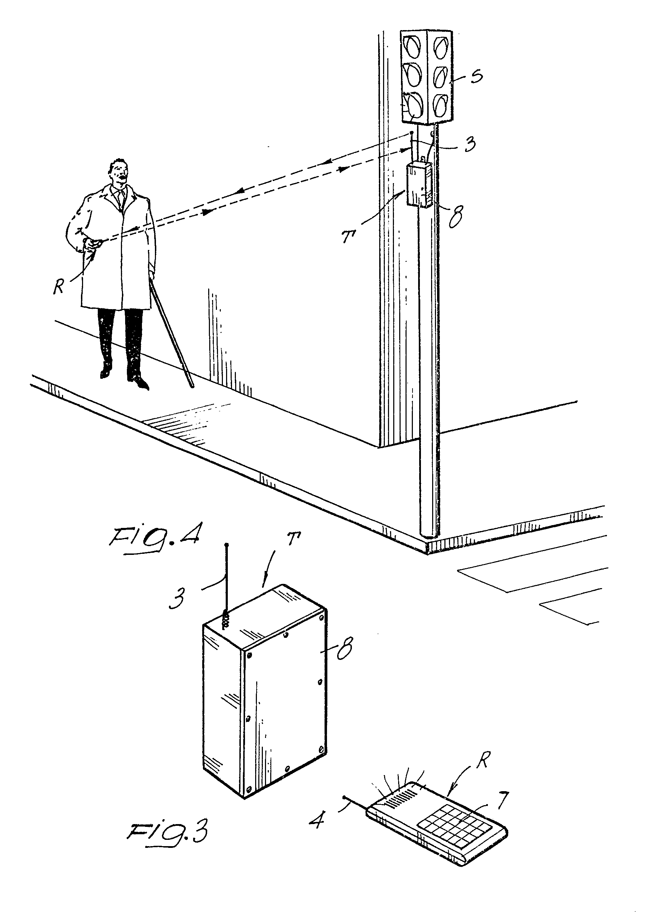

With reference to the figures of the drawings and, more specifically, to figures 1 and 2, there are herein shown block diagrams of a possible transmitting or broadcasting station and a possible receiving station included in the broadcasting system according to the invention.

More specifically, the transmitting station, indicated overally at the reference letter T, comprises a small computer 1, for storing and managing messages, which is operatively coupled to the broadcasting or transmitting unit proper 2 which, according to a preferred embodiment of the invention, consists of a small range radiotransmitting apparatus.

In particular, the transmitting unit 2, comprises a directional array 3 for broadcasting stored messages, under the control of the computer 1.

According to the invention, in the mentioned computer 1, the messages are so stored that they can be played back, by means of known voice synthetizers included in the receiving station, which will be disclosed in a more detailed way hereinafter, with intelligible voice signals.

More specifically, the organization of the mentioned messages will be based on different levels, from a simple localizing sound signalling up to the sending of more complex intelligible signals, depending on the requirements of the user; the basic idea being that of providing essential information in the most quick and simple way.

With reference to figure 2, there is herein shown a possible block diagram of the portable receiving station which has been indicated at the reference letter R.

As is shown, the receiving station R essentially comprises a receiving unit, indicated at the reference number 4, which has been specifically designed to automatically tune on the transmitter T in order to drive a voice synthetizing assembly indicated overally at the reference number 5.

Also this receiving station R will preferably comprise a directional type of array 6 in order to allow for the user to walk toward the transmittion statio T.

Upon tuning, the user may poll, through a simple keyboard 7 associated with the receiving station R, the transmitting station T in order to obtain the required information.

In order to afford the possibility of simultaneously receiving independent polling signals from different receiving stations, each message emitted by the transmitting station T may be preceded by a code of the polling receiving station R to be played back exclusively by the latter.

In the case shown in figure 4, in which the transmitting station T has been associated with a traffic light assembly S, the localizing sound signal can also directly indicate the status of the traffic light assembly.

In this case, additional information can consist of: width of the road, duration of the green status of the traffic light assembly, denomination of the adjoining roads and so on.

According to a further advantageous feature, the invention further provides to include in each receiving station supply rechargeable batteries (not shown).

In this connection it should be apparent that the single receiving stations will be so designed and arranged as to be easily transported.

The fixed broadcasting stations T can be housed in tight cabinets 8 adapted to be quickly and easily installed along the town roads; this units, on the other hand, must not interfere with the normal operations of other persons; obviously, the fixed stations T may operate either independently from one another or they maybe coupled in a net.

Figure 5 shows a perspective view in which the subject system has been applied to a public office which, owing to the invention, may be easily localized by the blind person.

From the above disclosure it should be apparent that the invention fully achieves the intended task and objects.

While the invention has been disclosed and illustrated with reference to a preferred embodiment thereof, it should be apparent that the disclosed embodiment is susceptible to several modifications and variations all of which will come within the scope and spirit of the appended claims.

## Claims

1. A computer controlled information broadcasting system, specifically designed for aiding blind persons in walking through a town, characterized in that said broadcasting system comprises at least a broadcasting or transmitting station, to be associated with a zone of interest, adapted to broadcast given information messages relating to said zone of interest, and at least a portable receiving station or device, adapted to automatically tune on said transmission station, said portable receiving station including means, to be actuated by the user, adapted to selectively poll said transmitting station and means adapted to transform the messages transmitted by said transmitting station into intelligible signals.

2. A system according to claim 1, characterized in that said transmitting station comprises computer means adapted to store and manage said messages, said computer means being operatively coupled to a low range receiving-transmitting unit.

3. A system according to one or more of the preceding claims, characterized in that said computer means are so designed as to store said messages under a form adapted to be successively transformed into voice signals.

4. A system according to one or more of the preceding claims, characterized in that the portable receiving station comprises a low range receiving-transmitting unit adapted to automatically tune on said transmitting station, said receiving station including moreover voice synthetizing means for transforming said messages into intelligible voice signals.

5. A system according to one or more of the preceding claims, characterized in that said computer means are adapted to store said messages according to a plurality of different levels.

6. A system according to one or more of the preceding claims, characterized in that said computer means comprise codifying means each of which is adapted to codify a transmitted message based on a code individually associated with each said receiving station.

Fig.1

Fig.2

Fig.5

Fig.4

Fig.3